(19) Europäisches Patentamt
European Patent Office
Office européen des brevets

(11) EP 0 612 335 B1

(12) EUROPÄISCHE PATENTSCHRIFT

(45) Veröffentlichungstag und Bekanntmachung des Hinweises auf die Patenterteilung:
**24.01.1996 Patentblatt 1996/04**

(21) Anmeldenummer: **92923364.1**

(22) Anmeldetag: **13.11.1992**

(51) Int Cl.⁶: **C08L 83/04**, C08K 5/57, C07F 7/22

(86) Internationale Anmeldenummer:
**PCT/EP92/02621**

(87) Internationale Veröffentlichungsnummer:
**WO 93/10186 (27.05.1993 Gazette 1993/13)**

(54) **ZINNVERBINDUNG ENTHALTENDE MASSEN ALS EINE DER BEIDEN KOMPONENTEN VON BEI RAUMTEMPERATUR ZU ORGANOPOLYSILOXANELASTOMEREN VERNETZENDEN ZWEIKOMPONENTENSYSTEMEN**

COMPOSITIONS CONTAINING TIN COMPOUNDS FOR USE AS ONE OF THE COMPONENTS OF TWO-COMPONENT SYSTEMS WHICH CROSS-LINK AT ROOM TEMPERATURE TO FORM ORGANOPOLYSILOXANE ELASTOMERS

SUBSTANCES RENFERMANT UN COMPOSE STANNEUX, FORMANT L'UN DES DEUX COMPOSANTS DE SYSTEMES A DEUX COMPOSANTS RETICULES, A TEMPERATURE AMBIANTE, EN ELASTOMERES ORGANOPOLYSILOXANNES

(84) Benannte Vertragsstaaten:
**AT BE CH DE ES FR GB IT LI NL SE**

(30) Priorität: **15.11.1991 DE 4137698**

(43) Veröffentlichungstag der Anmeldung:
**31.08.1994 Patentblatt 1994/35**

(73) Patentinhaber: **WACKER-CHEMIE GMBH**
**D-81737 München (DE)**

(72) Erfinder:
- **SCHILLER, August, Dr.**
  **D-84524 Neuoetting (DE)**
- **DORSCH, Norman**
  **D-84489 Burghausen (DE)**
- **GRAF, Werner, Dr.**
  **D-84489 Burghausen (DE)**
- **STRASSER, Alois**
  **D-84489 Burghausen (DE)**

(56) Entgegenhaltungen:

| | |
|---|---|
| **EP-A- 0 304 958** | **GB-A- 866 561** |
| **US-A- 3 186 963** | **US-A- 4 462 936** |

- **Römpps Chemie Lexikon, 9. Auflage, Georg Thieme Verlag, Stuttgart, Seite 4152 (1992)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Aus US-A 4,490,500 (ausgegeben 25. Dezember 1984, R. A. Smith, General Electric Co.) sind bereits Zinnverbindungen enthaltende Massen als eine der beiden Komponenten von bei Raumtemperatur zu Organopolysiloxanelastomeren vernetzenden Zweikomponentensystemen bekannt. Eine Masse dieser Art wird gemäß der vorstehend genannten Druckschrift z.B. durch Vermischen von (1) Umsetzungsprodukt von Tetraethylsilikat mit Dibutylzinndilaurat mit (2) gamma-Aminopropyltriethoxysilan, (3) pyrogen erzeugtem Siliciumdioxid, das mit Hexamethyldisilazan behandelt worden war, (4) Calciumcarbonat und (5) Vinylendgruppen aufweisendem Dimethylpolysiloxan hergestellt.

In EP-A 304 958 (offengelegt am 01. März 1989, M. Fukayama et al., Toray Silicone Co.) sind ebenfalls Zinnverbindungen enthaltende Massen als eine der beiden Komponenten von bei Raumtemperatur zu Organopolysiloxanen vernetzenden Zweikomponentensystemen beschrieben, z. B. Mischungen aus (1) 1,2-Bis-(triethoxysilyl)-ethan, (2) einem Umsetzungsprodukt von gamma-Aminopropyl-trimethoxysilan und gamma-Glycidoxypropyltri-methoxysilan und (3) Dibutylzinndilaurat.

Es bestand nun die Aufgabe, Zinnverbindung enthaltende Massen als eine der beiden Komponenten von bei Raumtemperatur zu Organopolysiloxanelastomeren vernetzenden Zweikomponentensystemen bereitzustellen, deren Herstellung nicht allzu aufwendig ist, die auch ohne Lösemittel homogen, geschmeidig weich, selbstnivellierend bis standfest sind, wobei letztere sich also auf Flächen, auf die sie aufgetragen wurden, ohne mechanische Bearbeitung nicht weiter verbreiten, transparent bis schwarz sein können und alle diese Eigenschaften auch nach längerer Lagerung bei tiefen wie hohen Umgebungstemperaturen noch aufweisen, nach Vermischen mit der anderen Komponente von bei Raumtemperatur zu Organopolysiloxanelastomeren vernetzenden Zweikomponentensystemen Elastomere ergeben, die besonders resistent gegen Witterungseinflüsse, Wasserdampf und heißes Wasser sind und auch ohne vorhergehende Grundierung auf den verschiedensten Materialien, nicht nur silikatischer Natur, wie Glas, sondern auch auf Metallen und Kunststoffen ausgezeichnet haften, und wobei sich die Verarbeitungszeit, d.h. die Zeit, die zwischen dem Beginn des Vermischens der beiden Komponenten miteinander und merklicher Vernetzung verstreicht, und die Eigenschaften der nach dem Vermischen und Vernetzen erhaltenen Elastomeren auch nach längerem Lagern der Massen vor diesem Vermischen und auch in Abhängigkeit von der Vernetzungstemperatur sich nicht oder nur wenig ändern. Diese Aufgabe wird durch die Erfindung gelöst.

Gegenstand der Erfindung sind Zinnverbindung enthaltende Massen als eine der beiden Komponenten von bei Raumtemperatur zu Organopolysiloxanelastomeren vernetzende Zweikomponentensystemen, die als wesentliche Bestandteile

(a) Triorganosiloxygruppen als endständige Einheiten aufweisendes Diorganopolysiloxan, worin die organischen Reste Kohlenwasserstoffreste sind, die halogeniert sein können,
(b) Umsetzungsprodukt von mindestens zwei über Sauerstoff an Silicium gebundene, einwertige, gegebenenfalls durch eine Alkoxygruppe substituierte Kohlenwasserstoffreste je Molekül aufweisendem Bis-silyl-alkan oder dessen Oligomer mit einem Diorganozinndiacylat
(c) Organosiliciumverbindung mit mindestens einer über Kohlenstoff an Silicium gebundenen Amino- bzw. Iminogruppe je Molekül, gegebenenfalls
(d) Füllstoff und gegebenenfalls
(e) Bis-silyl-alkan und/oder Silan mit mindestens drei über Sauerstoff an Silicium gebundenen, einwertigen, gegebenenfalls durch eine Alkoxygruppe substituierten Kohlenwasserstoffresten je Molekül oder dessen Oligomer enthalten, mit der Maßgabe, daß wenn bei der Bereitung von Umsetzungsprodukt (b) Bis-silyl-alkan mit nur zwei über Sauerstoff an Silicium gebundenen, einwertigen, gegebenenfalls durch eine Alkoxygruppe substituierten Kohlenwasserstoffreste je Molekül oder nicht mehr als 8 Grammäquivalent über Sauerstoff an Silicium gebundene, einwertige, gegebenenfalls durch eine Alkoxygruppe substituierte Kohlenwasserstoffreste je Grammol Diorganozinndiacylat verwendet wird bzw. werden, so müssen die erfindungsgemäßen Massen auch (e) Bis-silyl-alkan und/ oder Silan mit mindestens drei über Sauerstoff an Silicium gebundenen, einwertigen, gegebenenfalls durch eine Alkoxygruppe substituierten Kohlenwasserstoffresten je Molekül oder dessen Oligomer enthalten.

Unter dem in der Beschreibung verwendeten Begriff Disilaalkan ist ein Bis-silyl-alkan zu verstehen.

Als Diorganopolysiloxan (a) mit Triorganosiloxygruppen als endständigen Einheiten ist solches der Formel

$$(CH_3)_2YSiO(SiR_2O)_nSiY(CH_3)_2$$

bevorzugt, wobei R gleiche oder verschiedene Kohlenwasserstoffreste mit 1 bis 8 Kohlenstoffatomen je Rest, wobei diese Reste halogeniert sein können, Y eine Methyl- oder Vinylgruppe und n eine ganze, positive Zahl mit einem solchen Wert bedeutet, daß die durchschnittliche Viskosität des jeweils verwendeten Diorganopolysiloxans (a) 1000 bis 100.000 mPa.s bei 25°C, insbesondere 1000 bis 50.000 mPa.s bei 25°C beträgt.

Beispiele für Kohlenwasserstoffreste in den Diorganopolysiloxanen (a) und damit auch für Kohlenwasserstoffreste

R sind Alkylreste, wie der Methyl-, Ethyl-, n-Propyl-, Isopropyl- und 2-Ethylhexylrest; Kohlenwasserstoffreste mit aliphatischen Kohlenstoff-Kohlenstoff-Doppelbindungen, wie der Vinylrest; Cycloalkylreste, wie der Cyclohexylrest und Methylcyclohexylreste; Arylreste, wie der Phenylrest; Alkarylreste, wie Tolylreste; und Aralkylreste, wie der Benzylrest.

Beispiele für halogenierte Kohlenwasserstoffreste in den Diorganopolysiloxanen (a) und damit auch für halogenierte Kohlenwasserstoffreste R sind insbesondere fluorierte Kohlenwasserstoffreste, wie der 3,3,3-Trifluorpropylrest und Difluorphenylreste.

Besonders bevorzugt als organische Reste in den Diorganopolysiloxanen (a) und damit auch als Reste R und Y ist der Methylrest.

Diorganopolysiloxane (a) sind bekannt und im Handel erhältlich.

Die erfindungsgemäßen Massen können eine Art von Diorganopolysiloxan (a) enthalten. Sie können aber auch ein Gemisch aus mindestens zwei verschiedenen Arten derartiger Organopolysiloxane enthalten.

Umsetzungsprodukte von Silan mit mindestens zwei über Sauerstoff an Silicium gebundenen, einwertigen, gegebenenfalls durch eine Alkoxygruppe substituierten Kohlenwasserstoffresten je Molekül oder dessen Oligomer mit einem Diorganozinndiacylat und die Herstellung solcher Umsetzungsprodukte sind bekannt. Hierzu sei außer auf die bereits eingangs genannte US-Patentschrift auf z.B. DE-AS 11 67 527, ausgegeben 09. April 1964, Farbenfabriken Bayer Aktiengesellschaft; US 3,186,963, ausgegeben 01. Juni 1965, I.T. Lewis et al., Midland Silicones Limited; US 3,927,052, ausgegeben 16. Dezember 1975, L.R. Vizzuraga, Fibers Industries Inc.; US 4,102,860, ausgegeben 25. Juli 1978, E. Wolfahrt et al., Wacker-Chemie GmbH; US 4,460,761, ausgegeben 17. Juni 1984, A. Schiller et al., Wacker-Chemie GmbH; und US 4,462,936, ausgegeben 31. Juli 1984, W. Hechtl et al., Wacker-Chemie GmbH, verwiesen.

Die Herstellung der erfindungsgemäßen Umsetzungsprodukte (b) von einem Disilaalkan oder dessen Oligomer mit einem Diorganozinndiacylat erfolgt analog zu der oben genannten Herstellung der Umsetzungsprodukte von einem Silan oder dessen Oligomer mit einem Diorganozinndiacylat.

Als mindestens zwei über Sauerstoff an Silicium gebundene, einwertige, gegebenenfalls durch eine Alkoxygruppe substituierte Kohlenwasserstoffreste je Molekül aufweisende Disilaalkane, die zur Herstellung der Umsetzungsprodukte (b) verwendet werden, sind solche der Formel

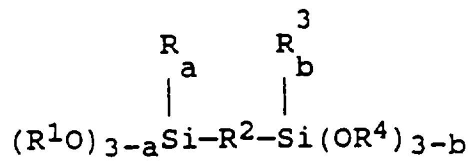

worin R die oben dafür angegebene Bedeutung hat, $R^3$ die Bedeutung von R hat, $R^1$ und $R^4$ einwertige, gegebenenfalls durch eine Alkoxygruppe substituierte Kohlenwasserstoffreste mit 1 bis 8 Kohlenstoffatomen je Rest bedeuten, $R^2$ ein unsubstituierter oder substituierter zweiwertiger Kohlenwasserstoffrest mit 1 bis 10 Kohlenstoffatomen je Rest ist, und a und b 0, 1 oder 2, vorzugsweise 0 oder 1 sind, oder deren Oligomere bevorzugt.

Die Reste R und $R^3$ sowie $R^1$ und $R^4$ können gleich oder verschieden sein.

Alle Ausführungen über und Beispiele für die Reste R in den Organopolysiloxanen (a) gelten auch für die Reste R und $R^3$ in der vorstehend angegebenen Formel.

Wenn $R^1$ und $R^4$ ein Kohlenwasserstoffrest sind, handelt es sich dabei vorzugsweise um einen Alkylrest mit 1 bis 4 Kohlenstoffatomen je Rest, wie den Methyl-, Ethyl-, n-Propyl-, Isopropyl-, n-Butyl- und sec.-Butylrest oder ein Gemisch aus mindestens zwei verschiedenen Resten dieser Art.

Beispiele für durch eine Alkoxygruppe substituierte Kohlenwasserstoffreste $R^1$ und $R^4$ sind solche der Formel

$CH_3O(CH_2)_2$-

$CH_3CH_2O(CH_2)_2$-

$CH_3OCH_2(CH_3)HC$- und

$CH_3OCH(CH_3)H_2C$-.

Beispiele für unsubstituierte Reste $R^2$ sind solche der Formel $-(CH_2)_2-$, $-(CH_2)_3-$, $-(CH_2)_4-$ und $-(CH_2)_8-$.

Beispiele für substituierte Reste $R^2$ sind solche der Formel $-CH(CH_3)CH_2-$, $-CH_2CH(CH_3)CH_2CH_2-$ und $-CH_2CH(C_2H_5)(CH_2)_4-$.

Unter den Oligomeren von Disilaalkanen der oben angegebenen Formel sind solche z.B. durch Teilhydrolyse derartiger Disilaalkane erhältliche Verbindungen zu verstehen, die mindestens 2 und höchstens 10 durch Siloxansauerstoff miteinander verbundene Siliciumatome und durchschnittlich mindestens 0,5 $R^1O$- und $R^40$-Gruppen je Siliciumatom enthalten.

Einzelne Beispiele für Disilaalkane, oder deren Oligomere, aus denen durch Umsetzung mit einem Diorganozinndiacylat die Umsetzungsprodukte (b) hergestellt werden können, sind 1,1-Bis-(trimethoxysilyl)-ethan, 1,2-Bis-(trimethoxysilyl)-ethan, 1,1-Bis-(Methyldimethoxysilyl)-ethan, 1,1-Bis-(triethoxysilyl)-ethan, 1,2-Bis-(triethoxysilyl)-ethan, 1,2 -Bis-(triethoxysilyl)-propan, 1-(Triethoxysilyl)-2-(methyl-diethoxysilyl)-ethan und 1,3-Bis-(2-triethoxysilylethyl)-tetraethoxydisiloxan.

Es kann eine Art von Disilaalkan der oben unter (b) definierten Art oder dessen Oligomer bei der Herstellung der Umsetzungsprodukte (b) durch Umsetzung mit einem Diorganozinndiacylat eingesetzt werden. Es kann aber auch ein Gemisch aus mindestens zwei verschiedenen Siliciumverbindungen dieser Art, z.B. ein Gemisch aus 1,2-Bis-(triethoxysilyl)-ethan und 1,2-Bis-(trimethoxysilyl)-ethan bei der Herstellung der Umsetzungsprodukte (b) eingesetzt werden.

Als Diorganozinndiacylate sind solche der Formel

$$R_2Sn(OOCR^5)_2$$

bevorzugt, worin R die oben dafür angegebene Bedeutung hat und $R^5$ gleiche Alkylreste mit 1 bis 12 Kohlenstoffatomen je Rest bedeutet. Die Beispiele für Alkylreste R gelten im vollen Umfang auch für die Reste $R^5$.

Einzelne Beispiele für Diorganozinndiacylate, durch deren Umsetzung mit einem Disilaalkan und/oder Oligomer der oben unter (b) definierten Art die Umsetzungsprodukte (b) hergestellt werden können, sind

Di-n-butylzinndiacetat

Di-n-butylzinndilaurat und

Di-2-ethylhexylzinndiacetat.

Es kann eine Art von Diorganozinndiacylat oder ein Gemisch aus mindestens zwei verschiedenen Arten von Diorganozinndiacylaten bei der Herstellung der Umsetzungsprodukte (b) verwendet werden.

Vorzugsweise werden die oben unter (b) definierten Siliciumverbindungen und damit auch die Disilaalkane der oben angegebenen Formel oder deren Oligomere bei der Herstellung der Umsetzungsprodukte (b) in Mengen von 4 bis 25 Grammäquivalent $R^1O$- und $R^40$-Gruppe je Grammol Diorganozinndiacylat eingesetzt.

Vorzugsweise enthalten die erfindungsgemäßen Massen Umsetzungsprodukte (b) in Mengen von 0,01 bis 1 Gewichtsprozent Zinn, insbesondere 0,05 bis 0,5 Gewichtsprozent Zinn, jeweils bezogen auf das Gesamtgewicht der jeweiligen Masse.

Als Organosiliciumverbindungen (c) mit mindestens einer über Kohlenstoff an Silicium gebundenen Amino- bzw. Imino-Gruppe sind Silane, die in jedem Molekül mindestens eine über Kohlenstoff an Silicium gebundene Aminogruppe bzw. Iminogruppe und mindestens einen über Sauerstoff an Silicium gebundenen, einwertigen, gegebenenfalls durch eine Amino- oder Alkoxygruppe substituierten Kohlenwasserstoffrest enthalten, und Siloxane mit mindestens einer über Kohlenstoff an Silicium gebundenen Amino- bzw. Iminogruppe je Molekül bevorzugt. Derartige Organosiliciumverbindungen (c) sind z.B. aus US 3,678,003, ausgegeben 18. Juli 1972, W. Kaiser et al., Wacker-Chemie GmbH und US 4,191,817, ausgegeben 04. März 1980, A. Schiller et al., Wacker-Chemie GmbH, bekannt. Es können beliebige Organosiliciumverbindungen, die in diesen beiden Druckschriften erwähnt sind oder unter die in diesen beiden Druckschriften angegebenen Formeln fallen, wenn sie unter die Definition der Organosiliciumverbindungen (c) der vorliegenden Erfindung fallen, bei der Bearbeitung der erfindungsgemäßen Massen verwendet werden.

Einzelne Beispiele für Silan der vorstehend definierten Art sind solche der Formel

$CH_3Si[O(CH_2)_2NH_2]_2(CH_2)_3O(CH_2)_2NH_2$

$(CH_3O)_3Si(CH_2)_3NH(CH_2)_2NH_2$

$H_2N(CH_2)_2O(CH_2)_3Si(OCH_2CH_2NH_2)_3$

$H_2N(CH_2)_2O(CH_2)_3Si(OC_2H_5)_3$

sowie Verbindungen mit den Bezeichnungen

gamma-Aminopropyltriethoxysilan

Aminomethyltriethoxysilan

3-(2-Aminoethylamino)-propyltri-n-propoxysilan und

delta-Aminobutyltriethoxysilan.

Ein wichtiges einzelnes Beispiel für ein Organopolysiloxan mit mindestens einer über Kohlenstoff an Silicium gebundenen Amino- bzw. Iminogruppe je Molekül ist ein Umsetzungsprodukt des Silans der Formel

$$H_2N(CH_2)_2NH(CH_2)_3Si(OCH_3)_3$$

mit einem in den endständigen Einheiten je eine Si-gebundene Hydroxylgruppe aufweisenden Dimethylpolysiloxan mit einer Viskosität von 80 mPa.s bei 25°C.

Vorzugsweise enthalten die erfindungsgemäßen Massen Organosiliciumverbindung (c) in Mengen von 1 bis 30 Gewichtsprozent, insbesondere 5 bis 20 Gewichtsprozent, jeweils bezogen auf das Gesamtgewicht der jeweiligen Masse.

Die erfindungsgemäßen Massen können verstärkenden und/oder nicht verstärkenden Füllstoff (d) enthalten. Vorzugsweise enthalten die erfindungsgemäßen Massen verstärkenden Füllstoff.

Als verstärkender Füllstoff (d), also Füllstoff mit einer spezifischen Oberfläche von mindestens 50 $m^2/g$, wird vorzugsweise Siliciumdioxid eingesetzt. Als verstärkender Füllstoff (d) wird bevorzugt Siliciumdioxid mit einer spezifischen Oberfläche von 100 bis 400 $m^2/g$, insbesondere 120 bis 300 $m^2/g$ eingesetzt. Besonders bevorzugt wird als verstärkender Füllstoff (d) pyrogen erzeugtes Siliciumdioxid verwendet. Falls erwünscht, können als verstärkender Füllstoff (d) jedoch auch unter Erhaltung der Struktur entwässerte Kieselsäurehydrogele, also sogenannte "Aerogele", oder andere Arten von gefälltem Siliciumdioxid mit einer spezifischen Oberfläche von mindestens 50 $m^2/g$ verwendet werden.

Die hier in der Beschreibung angegebenen Werte für die spezifische Oberfläche von Siliciumdioxid oder anderem Füllstoff sind BET-Werte, also Werte, die durch Stickstoffadsorption gemäß ASTM Special Technical Publication No. 51, 1941, Seite 95 ff. bestimmt wurden.

Vorzugweise wird verstärkender Füllstoff (d) in Mengen von 10 bis 50 Gewichtsprozent, bezogen auf das Gewicht der jeweils verwendeten Menge an Organopolysiloxan (a), eingesetzt.

Vorzugsweise wird der verstärkende Füllstoff, bevorzugt Siliciumdioxid mit einer spezifischen Oberfläche von mindestens 50 $m^2/g$, besonders bevorzugt pyrogen erzeugtes Siliciumdioxid, vor seiner Verwendung in den erfindungsgemäßen Massen durch Umsetzung mit einer Organosiliciumverbindung hydrophobiert.

Als organosiliciumverbindung, mit der verstärkender Füllstoff, insbesondere Siliciumdioxid hydrophobiert wird, ist solche der Formel

$$(R_3Si)_mX ,$$

worin R die oben dafür angegebene Bedeutung hat, X Halogen, OH, $OR^1$ ($R^1$ hat die oben dafür angegebene Bedeutung), S, $OOCR^6$ ($R^6$ = Kohlenwasserstoffrest mit 1 bis 4 Kohlenstoffatomen) oder $NR^7$ ($R^7$ = Wasserstoff oder hat die gleiche Bedeutung wie $R^6$) und m 1 oder 2 bedeutet, bevorzugt. Unter diesen Verbindungen ist Hexamethyldisilazan besonders bevorzugt.

Die Hydrophobierung von verstärkendem Füllstoff (d), insbesondere Siliciumdioxid mit einer spezifischen Oberfläche von mindestens 50 $m^2/g$, durch Umsetzung mit einer Organosiliciumverbindung wird besonders bevorzugt in Gegenwart von Triorganosiloxygruppen als endständige Einheiten aufweisendem Diorganopolysiloxan (a), worin die organischen Reste Kohlenwasserstoffreste sind, die halogeniert sein können, und Wasser unter mechanischer Beanspruchung des Gemisches bei erhöhter Temperatur, wobei nach dieser Hydrophobierung Wasser und überschüssige, zur Hydrophobierung verwendete Organosiliciumverbindung aus der bei der Hydrophobierung erhaltenen Mischung entfernt werden, durchgeführt. Das Verfahren ist aus z.B. US 4,101,499, ausgegeben 18. Juli 1978, J. Herzig, Bayer Aktiengesellschaft, bekannt. Diese Hydrophobierung und die daran anschließende Entfernung von Wasser und überschüssiger Organosiliciumverbindung erfolgt selbstverständlich, bevor die dabei erhaltene Mischung mit den übrigen Bestandteilen der erfindungsgemäßen Massen vermischt wird. Bei der Hydrophobierung wird Wasser vorzugsweise in Mengen von 0,1 bis 20 Gewichtsprozent, insbesondere 2 bis 10 Gewichtsprozent, jeweils bezogen auf die bei der Hydrophobierung anwesende Gewichtsmenge an Diorganopolysiloxan (a), eingesetzt.

Die erfindungsgemäßen Massen können auch nicht verstärkende Füllstoffe enthalten.

Beispiele für nicht verstärkende Füllstoffe (d), d.h. Füllstoffe mit einer spezifischen Oberfläche von weniger als 50 $m^2/g$, sind Ruß, Quarzmehl, Neuburger Kieselkreide, Diatomeenerde, Calciumsilicat, Zirkoniumsilicat, Calciumcarbonat und Aluminiumoxid, wobei auch diese nicht verstärkenden Füllstoffe an ihrer Oberfläche Organosilylgruppen aufweisen können oder auf andere Weise vorbehandelt sein können, und organische Polymere in faseriger oder pulveriger Form wie Polyvinylchloridpulver. Besonders bevorzugt ist Calciumcarbonat.

Wenn bei der Bereitung von Umsetzungsprodukt (b) Disilaalkan mit nur zwei über Sauerstoff an Silicium gebundenen, einwertigen, gegebenenfalls durch eine Alkoxygruppe substituierten Kohlenwasserstoffreste je Molekül oder nicht mehr als 8 Grammäquivalent über Sauerstoff an Silicium gebundene, einwertige, gegebenenfalls durch eine Alkoxygruppe substituierte Kohlenwasserstoffreste je Grammol Diorganozinndiacylat verwendet wurde bzw. wurden, so müssen die erfindungsgemäßen Massen auch (e) Disilaalkan und/oder Silan mit mindestens drei über Sauerstoff an Silicium

gebundenen, einwertigen, gegebenenfalls durch eine Alkoxygruppe substituierten Kohlenwasserstoffresten je Molekül oder dessen Oligomer enthalten.

Alle Ausführungen über und Beispiele für zur Herstellung von Umsetzungsprodukt (b) verwendete Disilaalkane, soweit sie mehr als zwei hydrolysierbare Reste je Molekül enthalten, gelten alle auch für die Disilaalkane (e).

Neben Disilaalkan können die erfindungsgemäßen Massen gegebenenfalls Silan mit mindestens drei über Sauerstoff an Silicium gebundenen, einwertigen, gegebenenfalls durch eine Alkoxygruppe substituierten Kohlenwasserstoffresten je Molekül oder dessen Oligomer enthalten. Silane der Formel

$$R_cSi(OR^1)_{4-c},$$

worin R die oben dafür angegebene Bedeutung hat, $R^1$ einwertige, gegebenenfalls durch eine Alkoxygruppe substituierte Kohlenwasserstoffreste mit 1 bis 8 Kohlenstoffatomen je Rest bedeutet, und c 0 oder 1 ist, oder deren Oligomere sind bevorzugt.

Alle Ausführungen über und Beispiele für die Reste R in den Organopolysiloxanen (a) und $R^1$ in den Disilaalkanen gelten auch für die Reste R und $R^1$ in der oben angegebenen Formel.

Einzelne Beispiele für Silane oder deren Oligomere sind Tetraethoxysilan, Tetra-n-butoxysilan, Vinyltriethoxysilan, Dimethyldiethoxysilan, Hexaethoxydisiloxan und Ethoxypolysiloxane mit einem $SiO_2$-Gehalt von 30 bis 45 Gewichtsprozent, z.B. ein Produkt, das unter der Bezeichnung "Ethylsilikat 40" im Handel erhältlich ist.

Vorzugsweise enthalten die erfindungsgemäßen Massen Organosiliciumverbindungen (e) in Mengen von 5 bis 10 Gewichtsprozent, insbesondere 10 bis 30 Gewichtsprozent, jeweils bezogen auf das Gesamtgewicht der jeweiligen Masse.

Es sei in diesem Zusammenhang bemerkt, daß die Summe der in den hier angegebenen Mengenbereichen tatsächlich gewählten Prozentsätze selbstverständlich 100 ergeben muß.

Vorzugsweise sind in den Bestandteilen (b), (c) und (e) die SiOC-gebundenen organischen Reste jeweils gleich.

Zusätzlich zu den Bestandteilen (a), (b), (c), sowie vorzugsweise (d) und (e) können die erfindungsgemäßen Massen gegebenenfalls weitere Stoffe enthalten, soweit diese Stoffe gegenüber den bisher genannten Bestandteilen inert und als Zusätze in Zinnverbindung enthaltenden Massen als eine der beiden Komponenten von bei Raumtemperatur zu Organopolysiloxanelastomeren vernetzenden Zweikomponentensystemen geeignet sind. Beispiele für derartige Stoffe sind insbesonders solche, wie sie oben unter (a) definiert sind, jedoch vor ihrer Zugabe zu den Massen frei von verstärkendem Füllstoff (d), insbesondere Siliciumdioxid, sind. Ihre Menge beträgt vorzugsweise höchstens 80 Gewichtsprozent, bezogen auf das Gesamtgewicht der jeweiligen Masse. Weitere Beispiele für gegenüber den übrigen Bestandteilen der erfindungsgemäßen Massen inerte Stoffe, die in den erfindungsgemäßen Massen zusätzlich vorliegen können, sind Pigmente, wie Ruß, Titandioxid und Eisenoxid, lösliche Farbstoffe, Duftstoffe, Thixotropiermittel, wie hydriertes Ricinusöl und verstärkende Füllstoffe, wie Siliciumdioxid mit einer Oberfläche von mindestens 50 $m^2/g$, das vor dem Vermischen besonders bevorzugt mit einem Organopolysiloxan der oben unter (a) definierten Art mit einer Organosiliciumverbindung, wie Hexamethyldisilazan oder einer anderen Verbindung, die unter die oben im Zusammenhang mit der Hydrophobierung von verstärkendem Füllstoff (d) angegebene Formel fällt, so vollständig umgesetzt wurde, daß es von Silanolgruppen frei ist.

Die andere Komponente als die Zinnverbindung enthaltende Masse, mit der die Zinnverbindung enthaltende Masse vermischt wird, um eine bei Raumtemperatur zu einem Organopolysiloxanelastomeren vernetzende Masse zu ergeben, kann selbstverständlich die gleichen Bestandteile enthalten, wie sie in deratigen anderen Komponenten auch bisher vorliegen konnten. Es sind dies insbesondere die zu vernetzenden Diorganopolysiloxane, meist solche, die durch die Formel

$$HO(SiR^8_2O)_pH$$

wiedergegeben werden können. In dieser Formel bedeutet $R^8$ gleiche oder verschiedene, einwertige SiC-gebundene organische Reste und p eine ganze Zahl im Werte von mindestens 10.

Innerhalb und/oder entlang der Siloxankette der vorstehend angegebenen Formel für in den endständigen Einheiten je eine Si-gebundene Hydroxylgruppe aufweisende Diorganopolysiloxane können, was bei derartigen Formeln üblicherweise nicht dargestellt wird, zusätzlich zu den Diorganosiloxaneinheiten ($SiR_2{}^8O$) noch andere Siloxaneinheiten vorliegen. Beispiele für solche anderen, meist jedoch nur als mehr oder weniger schwer vermeidbare Verunreinigungen vorliegende Siloxaneinheiten sind solche der Formel $R^8SiO_{3/2}$, $R_3{}^8SiO_{1/2}$ und $SiO_{4/2}$, wobei $R^8$ jeweils die oben dafür angegebene Bedeutung hat. Die Menge an solchen anderen Siloxaneinheiten sollte jedoch 1 % der Anzahl der in diesen Diorganopolysiloxanen vorliegenden Siloxaneinheiten nicht überschreiten. Wieder andere zusätzliche Siloxaneinheiten, wie solche der Formel

$$-OSiR^8_2R^9SiR^8_2O-$$

worin $R^8$ die oben dafür angegebene Bedeutung hat und $R^9$ ein zweiwertiger Kohlenwasserstoffrest ist, z.B. der Phenylenrest ist, können auch in größeren Mengen vorhanden sein.

Beispiele für organische Reste $R^8$ sind Kohlenwasserstoffreste, wie Alkylreste, z.B. der Methyl-, Ethyl-, n-Propyl-und Isopropylrest sowie Butyl-, Hexyl- und Octadecylreste; Reste mit aliphatischen Kohlenstoff-Kohlenstoff-Doppelbindungen, wie der Vinyl-, Allyl-, Ethylallyl- und Butadienylrest; Arylreste, wie der Phenylrest, Alkarylreste, wie Tolylreste; und Aralkylreste, wie der beta-Phenylethylrest.

Diese Kohlenwasserstoffreste können substituiert, insbesondere halogeniert, sein, wie der 3,3,3-Trifluorpropylrest, Chlorphenyl- und Bromtolylreste. Weitere Beispiele für organische Reste $R^8$ sind Cyanalkylreste, wie der beta-Cyanethylrest.

Diese in den endständigen Einheiten je eine Si-gebundene Hydroxylgruppe aufweisenden Organopolysiloxane können im Gemisch mit in ihrer Gegenwart durch Polymerisation bzw. Mischpolymerisation mittels freier Radikale erzeugten Polymeren aus durch Additionspolymerisation polymerisierbaren Verbindungen, wie Styrol, Vinylacetat, Acrylsäure, Methacrylsäure, Acrylsäureestern, Methacrylsäureestern oder Acrylnitril oder einem Gemisch aus mindestens zwei derartiger polymerisierbarer Verbindungen, wie einem Gemisch aus Styrol und n-Butylacrylat, vorliegen. Diese Polymerisate müssen nicht alle im Gemisch mit den Diorganopolysiloxanen vorliegen. Sie können vielmehr zumindest in geringem Umfang auf das Diorganopolysiloxan aufgepfropft sein.

Mindestens der überwiegende Teil der Reste $R^8$ (soweit kein Polymerisat darauf aufgepfropft ist) besteht vor allem wegen der leichten Zugänglichkeit vorzugsweise aus Methylresten. Die gegebenenfalls vorhandenen übrigen Reste $R^8$ sind insbesondere Vinylreste oder Phenylreste oder Vinyl- und Phenylreste.

Die Viskosität der zu vernetzenden Organopolysiloxane beträgt vorzugsweise 100 bis 500.000 mPa.s bei 25°C.

Bevor die zu vernetzenden Organopolysiloxane mit den erfindungsgemäßen Massen vermischt werden, können sie nicht nur gegebenenfalls die oben erwähnten, in ihrer Gegenwart erzeugten Polymerisate, sie können vielmehr gegenüber diesen Polymerisaten zumindest bei Raumtemperatur inerte Stoffe enthalten, die übliche Bestandteile von zu Organopolysiloxanelastomeren härtbaren Massen sind. Beispiele für solche Stoffe sind verstärkende Füllstoffe, nicht-verstärkende Füllstoffe, Pigmente, lösliche Farbstoffe, Duftstoffe, Korrosionsinhibitoren, Oxydationsinhibitoren, Hitzestabilisatoren, Peroxide, Organopolysiloxanharze aus $(CH_3)_3SiO_{1/2}$- und $SiO_{4/2}$-Einheiten, solche Organopolysiloxanharze vorzugsweise in Mengen von höchstens 1 Gewichtsprozent, bezogen auf das Gewicht von zu vernetzendem Organopolysiloxan, in Abwesenheit der Diorganopolysiloxane erzeugte rein-organische Harze, wie Polyvinylchloridpulver und Weichmacher, wie die oben unter (a) definierten Organopolysiloxane, sowie Polyglykole, die verethert und/oder verestert sein können, einschließlich Organosiloxan-Oxyalkylen-Blockmischpolymerisate.

Beispiele für verstärkende Füllstoffe, die sich im Gemisch mit den zu vernetzenden Organopolysiloxanen befinden können, bevor bzw. wenn diese mit erfindungsgemäßer Masse vermischt werden, sind pyrogen erzeugtes Siliciumdioxid mit einer spezifischen Oberfläche von mindestens 50 $m^2/g$, Aerogele oder anderes gefälltes Siliciumdioxid mit einer spezifischen Oberläche von mindestens 50 $m^2/g$. Mindestens ein Teil dieser Füllstoffe kann auf seiner Oberfläche Organosilylgruppen aufweisen.

Die bereits etwas weiter oben erwähnten Beispiele für nicht-verstärkende Füllstoffe gelten im vollen Umfang auch für die nicht-verstärkenden Füllstoffe, die sich im Gemisch mit den zu vernetzenden Organopolysiloxanen befinden können, bevor bzw. wenn diese mit erfindungsgemäßer Masse vermischt werden.

Die erfindungsgemäßen Massen werden mit der anderen Komponente des jeweiligen, bei Raumtemperatur zu einem Organopolysiloxanelastomer vernetzenden Zweikomponentensystems, dessen eine Komponente Zinnverbindung enthält, in solchen Mengen vermischt, daß in der so erhaltenen fertigen Mischung das in bei Raumtemperatur zu Organopolysiloxanelastomeren vernetzenden Zweikomponentensystemen, deren eine Komponente Zinnverbindung enthält, übliche Verhältnis von zu vernetzendem Organopolysiloxan zu Verbindung, wie sie oben unter (e) definiert ist, und Zinn vorliegt, wobei die Menge an Zinn, berechnet als Element, vorzugsweise 10 bis 1000 Gewichts-ppm, insbesondere 50 bis 500 Gewichts-ppm, jeweils bezogen auf das Gesamtgewicht der fertigen Mischung, beträgt.

Vorzugsweise werden die erfindungsgemäßen Massen in Mengen von 1 bis 20 Gewichtsprozent, insbesondere 5 bis 15 Gewichtsprozent und besonders bevorzugt 10 bis 15 Gewichtsprozent, bezogen auf die jeweils verwendete Menge der anderen Komponente, eingesetzt.

Die durch Vermischen von erfindungsgemäßer Masse mit der anderen Komponente von bei Raumtemperatur zu Organopolysiloxanelastomeren vernetzenden Zweikomponentensystemen erhaltenen Massen können zu beliebigen Zwecken eingesetzt werden, bei denen bei Raumtemperatur zu Organopolysiloxanelastomeren vernetzende Zweikomponentensysteme, deren eine Komponente Zinnverbindung enthält, eingesetzt werden können.

Es sind dies z.B. die Verwendung als Klebstoffe in der Elektro-, Elektronik-, Fahrzeug- und Flugzeugindustrie, zu Dichtung von Fugen und ähnlichen Leerräumen im Hoch- und Tiefbau, für geklebte Verglasung (Structural Glazing), d.h. für eine Bauart, bei der transparente oder opake Glasscheiben oder Glaselemente durch Verklebung miteinander verbunden oder mit dem Rahmen verbunden werden, als Randverbundmaterial bei der Herstellung von Isolierglaseinheiten und zur Herstellung von Schutzüberzügen.

In den folgenden Beispielen beziehen sich alle Angaben von Teilen und Prozentsätzen auf das Gewicht, soweit nichts anderes angegeben ist.

In den folgenden Beispielen bedeutet die Angabe, daß eine Paste standfest (englisch: non-slump properties) ist,

daß sie bei Prüfung nach EN (Europäische Norm) 27390 aus einer senkrechten Schiene mit Profil der Dimensionierung (Breite 20 mm ± 0,2 mm, Tiefe 10 mm ± 0,2 mm) nicht mehr als 2 mm austritt.

Beispiel 1

a) 100 Teile eines in den endständigen Einheiten je eine Vinylgruppe enthaltenden Dimethylpolysiloxans mit einer Viskosität von 20.000 mPa.s bei 25°C werden in einem Muldenkneter unter Stickstoff mit 19 Teilen Hexamethyldisilazan und 7 Teilen Wasser vermischt und in dem Kneter 15 Minuten bei Raumtemperatur bewegt, um eine gleichmäßige Mischung zu erhalten. Die so erhaltene Mischung wird in dem Kneter mit 63 Teilen eines pyrogen in der Gasphase erzeugten Siliciumdioxids mit einer spezifischen Oberfläche von 300 $m^2/g$ vermischt. Die so erhaltene Mischung wird zuerst eine Stunde bei Raumtemperatur und dann 2 Stunden bei 100°C geknetet. Dann wird durch Absaugen von gasförmigem Inhalt aus dem Kneter in diesem Kneter der Druck auf 80 hPa (abs.) erniedrigt, der verbleibende Kneterinhalt auf 140°C erwärmt und bei dieser Temperatur 2 Stunden geknetet. Nach dem Abkühlen auf Raumtemperatur und Belüften werden 100 Teile der so erhaltenen Mischung mit 30 Teilen des in den endständigen Einheiten je eine Vinylgruppe enthaltenden Dimethylpolysiloxans mit einer Viskosität von 20.000 mPa.s bei 25°C verdünnt.

b) Ein Gemisch aus 3 Teilen Bis-(triethoxysilyl)-ethan und 1 Teil Di-n-butylzinndiacetat wird unter Rühren 6 Stunden auf 120°C bei Druck der umgebenden Atmosphäre erwärmt. Gleichzeitig wird der entstehende Essigsäureethylester stetig abdestilliert. Danach ist gemäß dem Infrarot-Spektrum die Valenzschwingung der Carboxylgruppe von Di-n-butylzinndiacetat, die bei 1600 $cm^{-1}$ liegt, verschwunden.

c) In einem Planetenmischer werden 72,2 Teile der Mischung, deren Herstellung in diesem Beispiel oben unter a) beschrieben wurde, zunächst mit 18 Teilen Bis-(triethoxysilyl)-ethan, dann mit 6 Teilen 3-Aminopropyltriethoxysilan und schließlich mit 3,3 Teilen des Umsetzungsprodukts, dessen Herstellung in diesem Beispiel vorstehend unter b) beschrieben wurde, bei Raumtemperatur und unter dem Druck der umgebenden Atmosphäre vermischt. Durch Erniedrigung des Drucks in dem Kneter werden schließlich gasförmige Bestandteile der Masse, die Blasen in der Masse bilden, entfernt.
Es wird eine transparente, homogene, geschmeidig weiche und standfeste Paste erhalten. Diese Eigenschaften der Paste ändern sich auch nach 7 Tagen Lagerung bei 70°C oder 2 Monaten Lagerung bei 50°C jeweils in einer luftdicht verschlossenen Zinntube nicht.

Beispiel 2

a) Die in Beispiel 1 unter b) beschriebene Arbeitsweise wird wiederholt mit der Abänderung, daß 4 Teile Bis-(trimethoxysilyl)-ethan anstelle von 3 Teilen Bis-(triethoxysilyl)-ethan eingesetzt werden, wobei Essigsäuremethylester anstelle von Essigsäureethylester abdestilliert wird.

b) In einem Planetenmischer werden 50 Teile eines in den endständigen Einheiten je eine Vinylgruppe enthaltenden Dimethylpolysiloxans mit einer Viskosität von 20.000 mPa.s bei 25°C bei Raumtemperatur und unter dem Druck der umgebenden Atmosphäre mit 15 Teilen Ruß, der eine spezifische Oberfläche von 45 $m^2/g$ aufweist, vermischt. Dann werden 25,5 Teile Bis-(trimethoxysilyl)-ethan, 9 Teile 3-(2-Aminoethyl)-aminopropyl-trimethoxysilan und 0,5 Teile des Umsetzungsproduktes, dessen Herstellung in diesem Beispiel unter a) beschrieben wurde, ebenfalls bei Raumtemperatur und unter dem Druck der umgebenden Atmosphäre eingerührt. Durch Erniedrigung des Drucks in dem Kneter werden schließlich gasförmige Bestandteile der Masse, die Blasen in der Masse bilden, entfernt.
Es wird eine schwarze, homogene, geschmeidig weiche und standfeste Paste erhalten. Die Eigenschaften dieser Paste ändern sich auch nach 7 Tagen Lagerung bei 70°C oder 2 Monaten Lagerung bei 50°C jeweils in einer luftdicht verschlossenen Zinntube nicht.

Vergleichsversuch V1

a) Ein Gemisch aus 3,5 Teilen Tetraethoxysilan und 1 Teil Di-n-Butylzinndilaurat wird unter Rühren 2 Stunden auf 140°C beim Druck der umgebenden Atmosphäre erwärmt. Danach ist gemäß dem IR-Spektrum die Valenzschwingung der Carbonylgruppe von Di-n-butylzinndilaurat, die bei 1600 $cm^{-1}$ liegt, verschwunden.

b) In einem Planetenmischer werden 26 Teile eines in den endständigen Einheiten je eine Vinylgruppe enthaltenden Dimethylpolysiloxans mit einer Viskosität von 20.000 mPa.s bei 25°C zunächst mit 24 Teilen Calciumcarbonat mit einer spezifischen Oberfläche von 2,5 $m^2/g$, dann mit 12 Teilen einer hydrophoben Kieselsäure mit einer spezifischen Oberfläche 140 $m^2/g$ und einem Kohlenstoffgehalt von 2,5 % bei Raumtemperatur und unter dem Druck der umgebenden Atmosphäre eingemischt. Daraufhin rührt man ebenfalls bei Raumtemperatur und unter dem Druck der umgebenden Atmosphäre nacheinander 12,7 Teile Tetraethoxysilan, 24 Teile 3-Aminopropyl-triethoxysilan und 1,3 Teile des Umsetzungsproduktes, dessen Herstellung in diesem Beispiel unter a) beschrieben wurde, ein. Durch Erniedrigung des Druckes in dem Kneter werden schließlich gasförmige Bestandteile der Masse, die Blasen in der Masse bilden, entfernt.
Es wird eine weiß gefärbte, homogene, geschmeidig weiche und standfeste Paste erhalten. Diese Eigenschaften ändern sich auch nach 7 Tagen Lagerung bei 70°C oder 2 Monaten Lagerung bei 50°C jeweils in einer luftdicht verschlossenen Zinntube nicht.

Vergleichsversuch V2

a) 22 Teile 3-Aminopropyl-triethoxysilan und 50 Teile 3-Glycidoxypropyl-trimethoxysilan werden bei Raumtemperatur und unter dem Druck der umgebenden Atmosphäre homogen miteinander vermischt, dann 7 Tage unter den gleichen Bedingungen im verschlossenen Gefäß stehengelassen.

b) In einem Planetenmischkneter werden 75 Teile der Mischung, deren Herstellung im Beispiel 1 unter a) beschrieben wurde, zunächst mit 17,4 Teilen Bis-(trimethoxysilyl)-ethan, dann mit 7,3 Teilen des Umsetzungsproduktes, dessen Herstellung in diesem Beispiel vorstehend unter a) beschrieben wurde, und schließlich mit 0,3 Teilen Di-n-butylzinndilaurat bei Raumtemperatur und unter Druck der umgebenden Atmosphäre vermischt. Durch Erniedrigung des Drucks in dem Kneter werden schließlich gasförmige Bestandteile der Masse, die Blasen in der Masse bilden, entfernt.
Es wird eine transparente, homogene, geschmeidig weiche und standfeste Paste erhalten. Nach siebentägiger Lagerung der Paste bei 70°C oder zweimonatiger bei 50°C jeweils in einer luftdicht verschlossenen Zinntube wurde die Paste wieder begutachtet: Ihre Viskosität hatte sich erhöht. Sie hatte sich außerdem gelblich verfärbt.

In den folgenden Beispielen wird die Anwendung der Massen, deren Herstellung in den Beispielen 1 und 2 und Vergleichsversuchen 1 und 2 beschrieben wurde, in bei Raumtemperatur zu Organopolysiloxanelastomeren vernetzenden Zweikomponentensystemen beschrieben.

Beispiel 3

In einem Planetenmischkneter werden 60 Teile eines in den endständigen Einheiten je eine Si-gebundene Hydroxidgruppe aufweisenden Dimethylpolysiloxans mit einer Viskosität von 75.000 mPa.s bei 25°C zunächst mit 50 Teilen eines durch Trimethylsiloxygruppen endblockierten Dimethylpolysiloxans mit einer Viskosität von 100 mPa.s bei 25°C, dann mit 2 Teilen 2,4,6-Tri-n-butylphenolpolyethylenglykolether mit 13 Ethylenoxideinheiten je Molekül und schließlich mit 90 Teilen Calciumcarbonat, dessen Oberfläche mit Stearinsäure überzogen ist, mit einer spezifischen Oberfläche von 20 $m^2/g$ vermischt. Anschließend werden durch Erniedrigung des Drucks in dem Kneter gasförmige Bestandteile der Masse, die Blasen in der Masse bilden können, entfernt.

Die so erhaltene andere Komponente als die Zinnverbindung enthaltende Komponente eines bei Raumtemperatur zu einem Organopolysiloxanelastomer vernetzenden Zweikomponentensystems ist homogen, geschmeidig weich und standfest. Je 100 Teile dieser anderen Komponente werden mit 10 Teilen der Pasten, deren Herstellung in Beispiel 1 unter c) und in Beispiel 2 unter b) sowie in den Vergleichsversuchen V1 und V2 unter b) beschrieben wurde, vermischt.

Die Ergebnisse sind in den folgenden Tabellen I und II angegeben. Dabei bedeutet:

1) Die mechanischen Werte der Elastomere wurden jeweils an 1,5 bis 2,2 mm dicken Folien bestimmt, die nach 14 Tagen Lagerung bei 23°C und 50 % relativem Wassergehalt der Luft von der glatten, ebenen und eingefetteten Unterlage, auf der sie erzeugt wurden, entfernt wurden.

2) bestimmt nach DIN 53504 mit Normstab S3A (Dickenschwankung des Stabs: höchstens ± 0,1 mm)

3) bestimmt nach DIN 53505

4) bei 23°C und 50 % relativen Wassergehalt der Luft.

Tabelle I[1)]

| Zinnverbindung enthaltende Masse, hergestellt gemäß Beispiel bzw. Vergleichsversuch | vor Anwendung gelagert | Vernetzungsbedingungen | Verarbeitungszeit in min. | Zugfestigkeit[2)] σ max. [N/mm²] | Reißdehnung[2)] ε max. [%] | Spannungswert bei 100 % Dehnung[2)] σ 100 [N/mm²] | Shore-A Härte[3)] |
|---|---|---|---|---|---|---|---|
| 1 c | - | 4) | 16 | 1,9 | 510 | 0,51 | 26 |
| 1 c | 7 Tage bei 70°C | 4) | 20 | 1,9 | 520 | 0,51 | 28 |
| 1 c | 2 Monate bei 50°C | 4) | 50 | - | - | - | - |
| 2 b | - | 4) | 17 | 1,4 | 370 | 0,45 | 23 |
| 2 b | 7 Tage bei 70°C | 4) | 24 | 1,5 | 450 | 0,42 | 25 |
| 2 b | 2 Monate bei 50°C | 4) | 19 | - | - | - | - |
| V1 | - | 4) | 27 | 0,45 | 380 | 0,20 | 13 |
| V1 | 7 Tage bei 70°C | 4) | 34 | 0,52 | 510 | 0,15 | 13 |
| V1 | 2 Monate bei 50°C | 4) | 58 | - | - | - | - |
| V2 | - | 4) | 56 | 2,2 | 710 | 0,41 | 25 |
| V2 | 7 Tage bei 70°C | 4) | 120 | 2,1 | 700 | 0,40 | 25 |
| V2 | 2 Monate bei 50°C | 4) | 300 | - | - | - | - |

## Tabelle II

Beständigkeit der nach den Beispielen 1 c und 2 b sowie den Vergleichsversuchen V1 und V2 hergestellten Elastomere[1] gegenüber Wasserdampf bei 70°C:

| | Beispiel- bzw. Vergleichsversuch | | | | | | | | | | | |
|---|---|---|---|---|---|---|---|---|---|---|---|---|
| | 1 c | | | 2 b | | | V1 | | | V3 | | |
| mech. Werte | +) | ++) | +++) | +) | ++) | +++) | +) | ++) | +++) | +) | ++) | +++) |
| Zugfestigkeit[2] N/mm² | 1,9 | 0,82 | 0,49 | 1,4 | 0,60 | 0,40 | 0,45 | depolymerisiert | | 2,2 | 1,6 | 1,3 |
| Reißdehnung[2] % | 510 | 620 | 470 | 370 | 670 | 620 | 380 | " | | 710 | 590 | 660 |
| Spannungswert bei 100 % Dehnung[2] N/mm² | 0,51 | 0,37 | 0,23 | 0,45 | 0,30 | 0,20 | 0,20 | " | | 0,41 | 0,30 | 0,22 |
| Shore-A-Härte[3] | 26 | 19 | 15 | 23 | 14 | 12 | 13 | " | | 25 | 21 | 15 |

+) nach Vernetzung[4] und Lagerung[1]

++) nach Vernetzung[4] und Lagerung[1] mit anschließender zweiwöchiger Lagerung bei 70°C und 100% relativer Luftfeuchtigkeit

+++) nach Vernetzung[4] und Lagerung[1] und anschließender achtwöchiger Lagerung bei 70°C und 100% relativer Luftfeuchtigkeit

Beispiel 4

Die zu einem Elastomeren vernetzende Masse, deren Herstellung oben unter Beispiel 3 beschrieben wurde, wird in Strangform auf den in Tabelle III angegebenen Unterlagen vernetzen gelassen, wobei diese Unterlagen ungrundiert sind und vor dem Auftragen der Stränge mit Lösemittel entfettet wurden. Die Ergebnisse der Prüfung der Haftfestigkeit auf den Unterlagen sind in Tabelle III angegeben.

Dabei bedeuten:

A) nach 7 Tagen nach Auftragen des Stranges auf die Unterlage und anschließende Lagerung der so erhaltenen Anordnung bei 23°C und 50 % relativem Wassergehalt der Luft

B) nach 7 Tagen nach Auftragen des Stranges auf die Unterlage, anschließende Lagerung der so erhaltenen Anordnung bei 23°C und 50 % relativem Wassergehalt der Luft und anschließender 14 Tage Lagerung der Anordnung unter Wasser bei 60°C

C) nach 7 Tagen nach Auftragen des Stranges auf die Unterlage, anschließende Lagerung der so erhaltenen Anordnung bei 23°C und 50 % relativem Wassergehalt der Luft und anschließender 28 Tage Lagerung der Anordnung unter Wasser bei 60°C

+ gute Haftung = Kohäsionsriß = Riß im Elastomer
Ø mäßige Haftung = Adhäsionsriß und Kohäsionsriß=Trennung von der Unterlage und Riß im Elastomer
- schlechte Haftung = Adhäsionsriß = Trennung von der Unterlage

## Tabelle III

Haftung des Elastomers hergestellt mit Zinnverbindung enthaltender Masse gemäß Beispiel bzw. Vergleichsversuch

| Unterlage | Beispiel bzw. Vergleichsversuch | | | | | | | | | | | |
|---|---|---|---|---|---|---|---|---|---|---|---|---|
| | 1 c | | | 2 b | | | V1 | | | V2 | | |
| | A | B | C | A | B | C | A | B | C | A | B | C |
| Glas | + | + | + | + | + | ϕ | + | − | − | + | + | ϕ |
| Aluminium | + | + | + | + | + | + | + | − | − | − | ϕ | − |
| Anodisch oxidiertes Aluminium | + | + | + | + | + | + | − | − | − | − | ϕ | ϕ |
| rostfreier Stahl | + | + | + | + | ϕ | + | + | − | − | − | + | + |
| Zinkblech | + | + | + | + | ϕ | + | + | − | − | − | + | ϕ |
| Hart-Polyvinylchlorid | + | ϕ | + | + | ϕ | ϕ | − | − | − | − | − | − |

Aus den Tabellen I bis III ist ersichtlich, daß die Zinnverbindung enthaltenden Massen 1 c und 2 b, die erfindungsgemäßes Umsetzungsprodukt von Disilaalkan mit einem Diorganodiacylat enthalten, besonders lagerstabil sind.

Werden je 10 Teile dieser Massen mit 100 Teilen der anderen Komponente (Grundmasse) vermischt, so resultieren daraus Massen, die nach ihrer Vernetzung bei Raumtemperatur Elastomere ergeben, die

- eine besonders gute mechanische Festigkeit haben
- gegenüber Heißwasser und Wasserdampf besonders stabil sind und
- besonders gut auch bei Heißwasserreinwirkung auf den verschiedensten Materialien haften.

## Patentansprüche

**1.** Zinnverbindung enthaltende Massen als eine der beiden Komponenten von bei Raumtemperatur zu Organopolysiloxanelastomeren vernetzenden Zweikomponentensystemen, die als wesentliche Bestandteile

a) Triorganosiloxygruppen als endständige Einheiten aufweisendes Diorganopolysiloxan, worin die organischen Reste Kohlenwasserstoffreste sind, die halogeniert sein können,

b) Umsetzungsprodukt von mindestens zwei über Sauerstoff an Silicium gebundene, einwertige, gegebenenfalls durch eine Alkoxygruppe substituierte Kohlenwasserstoffreste je Molekül aufweisendem Bis-silyl-alkan oder dessen Oligomer mit einem Diorganozinndiacylat,

c) Organosiliciumverbindung mit mindestens einer über Kohlenstoff an Silicium gebundenen Amino- bzw. Iminogruppe je Molekül, gegebenenfalls

d) Füllstoff und gegebenenfalls

e) Bis-silyl-alkan und/oder Silan mit mindestens drei über Sauerstoff an Silicium gebundenen, einwertigen, gegebenenfalls durch eine Alkoxygruppe substituierten Kohlenwasserstoffresten je Molekül oder dessen Oligomer

enthalten, mit der Maßgabe, daß wenn bei der Bereitung von Umsetzungsprodukt (b) Bis-silyl-alkan mit nur zwei über Sauerstoff an Silicium gebundenen, einwertigen, gegebenenfalls durch eine Alkoxygruppe substituierten Kohlenwasserstoffreste je Molekül oder nicht mehr als 8 Grammäquivalent über Sauerstoff an Silicium gebundene, einwertige, gegebenenfalls durch eine Alkoxygruppe substituierte Kohlenwasserstoffreste je Grammol Diorganozinndiacylat verwendet wird bzw. werden, so müssen die erfindungsgemäßen Massen auch (e) Bis-silyl-alkan und/oder Silan mit mindestens drei über Sauerstoff an Silicium gebundenen, einwertigen, gegebenenfalls durch eine Alkoxygruppe substituierten Kohlenwasserstoffresten je Molekül oder dessen Oligomer enthalten.

**2.** Massen nach Anspruch 1,
dadurch gekennzeichnet,
daß die in den Bestandteilen (b), (c) und (e) enthaltenen SiOC-gebundenen organischen Reste gleich sind.

## Claims

**1.** Tin compound-containing compositions as one of the two components of two-component systems which cross-link at room temperature to give organopolysiloxane elastomers, the compositions containing, as essential constituents

(a) a diorganopolysiloxane which contains triorganosiloxy groups as terminal units and in which the organic radicals are hydrocarbon radicals, which may be halogenated,

(b) a product of the reaction of a bis-silyl-alkane containing at least two monovalent hydrocarbon radicals per molecule which are bonded to silicon via oxygen and are optionally substituted by an alkoxy group, or an oligomer thereof, with a diorganotin diacylate,

(c) an organosilicon compound containing at least one amino or imino group per molecule which is bonded to silicon via carbon, if desired

(d) a filler and if desired

(e) a bis-silyl-alkane and/or silane containing at least three monovalent hydrocarbon radicals per molecule which are bonded to silicon via oxygen and are optionally substituted by an alkoxy group or an oligomer thereof, with the proviso that if, in preparing reaction product (b), use is made of bis-silyl-alkane containing only two monovalent hydrocarbon radicals per molecule which are bonded to silicon via oxygen and are optionally substituted by an alkoxy group or of not more than 8 gram equivalent of monovalent hydrocarbon radicals which are bonded to silicon via oxygen and are optionally substituted by an alkoxy group per gram of diorganotin diacylate, then the compositions according to the invention must also contain (e) bis-silyl-alkane and/or silane containing at least three monovalent hydrocarbon radicals per molecule which are bonded to silicon via oxygen and are optionally substituted by an alkoxy group, or an oligomer thereof.

**2.** Compositions according to Claim 1, characterised in that the SiOC-bonded organic radicals in the constituents (b), (c) and (e) are identical.

**Revendications**

**1.** Compositions renfermant un composé stanneux comme l'un des deux composants de systèmes à deux composants réticulés à température ambiante, en élastomères organopolysiloxannés, contenant essentiellement les composants suivants :

a) un diorganopolysiloxane présentant des groupes triorganosiloxy comme unités terminales, dans lequel les radicaux organiques sont des radicaux hydrocarbure qui peuvent être halogénés,
b) le produit de réaction d'un bis-silylalcane présentant, par molécule, au moins deux radicaux hydrocarbure monovalents, liés au silicium par un oxygène, facultativement substitués par un groupe alcoxy, ou son oligomère, avec un diacylate de diorganoétain;
c) un composé organosilicié avec au moins, par molécule, un groupe amino et respectivement imino lié par un carbone au silicium, facultativement
d) une charge et, facultativement
e) un bis-silylalcane et/ou un silane avec, par molécule, au moins trois radicaux hydrocarbure monovalents, liés au silicium par un oxygène, facultativement substitués par un groupe alcoxy, ou son oligomère,

avec la condition que, lors de la préparation du produit de réaction (b), on utilise un bis-silylalcane avec seulement, par molécule, deux radicaux hydrocarbure monovalents, liés au silicium par un oxygène, facultativement substitués par un groupe alcoxy ou pas plus de 8 équivalents-grammes de radicaux hydrocarbure monovalents, liés au silicium par un oxygène, facultativement substitués par un groupe alcoxy, par mole-gramme de diacylate de diorganoétain, et respectivement les compositions suivant l'invention peuvent également contenir (e) le bis-silylalcane et/ou le silane avec, par molécule, au moins trois radicaux hydrocarbure monovalents, liés au silicium par un oxygène, facultativement substitués par un groupe alcoxy, ou son oligomère.

**2.** Compositions suivant la revendication 1, caractérisées en ce que les radicaux organiques à liaison Si-O-C contenus dans les composants b), c) et e) sont identiques.